# EUROPEAN PATENT SPECIFICATION

(11) **EP 2 590 730 B1**
(45) Date of publication and mention of the grant of the patent: **25.06.2014**
(21) Application number: 12727966.9
(22) Date of filing: 31.05.2012
(51) Int. Cl.: B01D 53/94, F01N 3/035, F01N 3/20

(54) **DUAL FUNCTION CATALYTIC FILTER**
KATALYTISCHER FILTER MIT DOPPELFUNKTION
FILTRE CATALYTIQUE DOUBLE FONCTION

(30) Priority: 31.05.2011 US 201161491870 P
(43) Date of publication of application: 15.05.2013
(73) Proprietor: Johnson Matthey Public Limited Company, London EC4A 4AB (GB)
(72) Inventor: SPREITZER, Glen, Collegeville, Pennsylvania 19426 (US); CHATTERJEE, Sougato, Wayne, Pennsylvania 19087 (US); RAJARAM, Raj Rao, Slough Buckinghamshire SL3 7PH (GB); COLLIER, Jillian Elaine, Reading RG4 7NL (GB); MILLINGTON, Paul James, Reading RG1 7HA (GB); LAROZE, Sylvie Cecile, B-4860 Pepinster (BE)
(74) Representative: Nunn, Andrew Dominic
(86) International application number: PCT/US2012/040064
(87) International publication number: WO 2012/166833

(56) References cited:
- WO-A1-2008/011146
- US-A1- 2006 179 825
- US-B2- 7 799 298

## Description

The present invention relates to catalysts, systems, and methods that are useful for treating an exhaust gas that is produced during combustion of hydrocarbon fuel, particularly a lean burn exhaust gas containing soot and nitrogen oxides produced by a diesel engine.

Exhaust gas is generated during the combustion of fuels such as natural gas, gasoline, diesel fuel, fuel oil or coal. When the combustion occurs in a chamber such as an engine or furnace, the resulting exhaust gas is typically treated prior to being discharged into the atmosphere through an exhaust pipe, flue gas stack or the like. The largest portion of exhaust gas consists of nitrogen (N₂), water vapour (H₂O), and carbon dioxide (CO₂); but untreated exhaust gas also contains, in relatively small part, undesirable noxious and/or toxic substances, such as carbon monoxide (CO) from incomplete combustion, hydrocarbons (HC) from un-burnt fuel, nitrogen oxides (NOₓ) (e.g., nitric oxide (NO), nitrogen dioxide (NO₂), and nitrous oxide (N₂O)) from excessive combustion temperatures, and particulate matter (insoluble carbon soot particles, liquid hydrocarbons (e.g. lube oil and unburned fuel), and a soluble organic fraction. Of particular relevance to the present invention is exhaust gas emitted from diesel engines which typically operate using a high air-to-fuel ratio (i.e., very lean conditions). Such lean burn conditions often result in an exhaust gas with relatively high emissions of particulate matter and NOₓ - two components which have proved to be difficult to efficiently convert into more benign substances.

Diesel engines are often equipped with exhaust systems that include one or more catalytic components which work separately or in combination to treat exhaust gas prior to its emission into the atmosphere. For example, it is known that NOₓ can be converted into elemental nitrogen, N₂, and water by reacting the NOₓ in the exhaust gas with NH₃ in the presence of certain supported catalysts via a process commonly referred to as selective catalytic reduction (SCR). Known SCR catalysts include vanadium (V₂O₅) carried by a mixture of ceria (CeO₂) and alumina (Al₂O₃) on a support (see EP 0 246 859), or V₂O₅/WO₃ supported on TiO₂ (see WO 99/39809). Other SCR catalysts have also been proposed such as mixed metal oxides such as Fe-W/CeZrO₂ (WO 2009/001131) and aluminosilicate and silicoaluminophosphate molecular sieves loaded with an extra-framework metal such as Cu:SAPO-34 (US Pat. Pub. 2010/0290963).

Unlike NOₓ treatment, soot remediation in an exhaust gas typically involves mechanical filtration. For example, soot emissions can be reduced by passing a soot-containing exhaust gas through a diesel particulate filter (DPF), such as a cordierite wall-flow filter (US Pat. Pub. 2010/0170230). However, the accumulation of soot particles on or in the filter can cause an undesirable increase in the back pressure across the filter which typically leads to decreased engine performance and efficiency. To regenerate the filter, the accumulated carbon-based soot must be removed from the filter which is typically accomplished by periodically combusting the soot. One such combustion technique involves catalytic oxidation of the soot at low temperatures via a soot oxidation catalyst incorporated onto the filter (i.e., a catalytic soot filter (CSF)) (US 4,902,487).

Conventional exhaust systems comprise separate components for NOₓ treatment (SCR) and soot treatment (CSF). Yet it is often desirable to design individual exhaust components to perform more than one function in order to reduce the total space required by the exhaust system, reduce costs, etc. For example, applying an SCR catalyst to a filter substrate (SCRF) serves to reduce the overall size of an exhaust treatment system by allowing one substrate to serve two functions, namely catalytic conversion of NOₓ by the SCR catalyst and removal of soot by the filter. For example, US Pat. Pub. 2010/0180580 discloses an SCR catalyst can be applied to a wall-flow DPF. However, removal of the soot oxidation catalyst in an SCRF requires the soot accumulated at the filter surface to be burned at very high temperatures. High temperature SCR catalysts, such as Cu:SAPO-34, are available but are insoluble in water and thus, these catalysts must be applied to the filter as a viscous washcoat. Coating the filter with thick catalyst slurry causes a significant increase in backpressure and a corresponding reduction in fuel economy and engine power. Moreover, a combination of conventional SCR and oxidation catalysts is not feasible because it results in localized competition for NO₂, thereby reducing the conversion efficiency of the SCR catalyst.

US Pat. Pub 2006/0179825 discloses a system and method in which a particulate filter comprises at least about 40% by weight of an NOₓ adsorbant. The filter can be used as both an NOₓ trap and a particulate filter. By constructing the filter elements using a substantial amount of NOₓ adsorbant, a large volume of NOₓ adsorbant can be incorporated into the particulate filter, which substantially reduces the volume and expense of an exhaust system that includes both a catalytic diesel particulate filter and an NOₓ trap having a large quantity of NOₓ adsorbant. In a preferred embodiment, the filter also oxidizes NO to NO₂. In another preferred embodiment, an SCR catalyst is position downstream of the filter elements.

Accordingly, there remains a need for an efficient system for treating soot and NOₓ in lean burn exhaust gas. This invention satisfies that need among others.

The present inventors have discovered a dual function catalytic filter which has a soot burning catalyst on the filter inlet and an SCR catalyst on the filter outlet. By coating a filter substrate with a soot oxidation catalyst capable of burning particulates on the inlet channels and a SCR washcoat on the outlet channels, the complexity, size, and cost of an exhaust gas treatment system can be reduced. Moreover, the present inventors have discovered that certain soot oxidation catalysts will not consume nitrogen-based reductants (urea, ammonia, etc.) that are required for the downstream SCR reaction. Therefore, the present invention allows a reductant to be dosed into the exhaust gas upstream of the filter containing the soot oxidation catalyst. Additionally, in certain embodiments, the separation of the soot oxidation catalyst and the SCR catalyst will prevent localized competition for NO₂ and improve overall activity. Other advantages of the invention include less backpressure and better overall emission and engine performance compared to conventional systems that utilize separate catalysed soot filters or SCR catalysts loaded on filter without a soot oxidation catalyst. Thus, such systems can be used to meet more stringent emission requirements that may be imposed by regulatory agencies.

Further improvements in performance can be obtained by integrating the dual function catalytic filter with an upstream diesel oxidation catalyst and at least one downstream SCR flow-through catalyst followed by an ammonia slip catalyst. Thus, in certain preferred embodiments, the dual function catalytic filter is a part of an exhaust treatment system that also includes an upstream diesel oxidation catalyst, at least one additional downstream SCR catalyst and a downstream ammonia slip catalyst.

Accordingly, provided is an article for treating an exhaust gas comprising: a) a soot filter having an inlet and an outlet, b) a soot oxidation zone on the inlet, wherein the soot oxidation zone comprises a soot oxidation catalytic component consisting essentially of at least one metal dispersed on a cerium and zirconium mixed and/or composite oxide, wherein the at least one metal is selected from the group consisting of W, Cr, Ce, Mn, Fe, Co, Ni, Cu, and combinations thereof, and c) an SCR zone coated on the outlet, wherein the SCR zone comprises an SCR catalytic component.

The inventors have found that soot oxidation activity generally increases as the relative concentration of ZrO₂ to CeO₂ increases. In certain preferred embodiments, the soot oxidation catalyst component has a formula of M:CeₓO₂Zr₁₋ₓO₂, wherein x = 0.1 to 0.9 or 0.99 and M is selected from W, Cr, Ce, Mn, Fe, Co, Ni, Cu, and combinations thereof, with W being most preferred. In certain preferred embodiments x is < 0.7, preferably < 0.5, more preferably < 0.3, such as < 0.25, < 0.20, or < 0.15. In certain embodiments, x < 0.1, such as < 0.07, < 0.05, < 0.03, or < 0.01, provided that x is > 0.001 or > 0.005. In a preferred embodiment, the soot oxidation catalyst component has a formula W:CeₓO₂Zr₁₋ₓO₂, wherein x = 0.1 to 0.9.

Certain SCR catalyst components for use in the present invention have a formula of M:CeₓO₂Zr₁₋ₓO₂, wherein x = 0.1 to 1.0, with x is > 0.3 being preferred, x > 0.5 being more preferred, and x > 0.7 being even more preferred; and M is selected from W, Cr, Ce, Mn, Fe, Co, Ni, Cu, and combinations thereof, with Fe and W being most preferred. For embodiments that include W in the SCR catalyst, the inventors have found that SCR activity increases with increasing CeO₂ concentration, increases with increasing W concentration, and particularly that SCR activity increases with the combination of increasing CeO₂ concentration and increasing W concentration. In certain embodiments, the value of x for the SCR catalyst is > 0.9, such as 0.95, 0.99, or 1.00. In certain preferred embodiments, the SCR catalyst is doped with at least two metals, W > 25 wt%, > 50 wt%, > 75 wt%, > 90 wt% or > 95 wt%, based on the total weight of the at least two metals. In certain embodiments, the SCR catalyst is doped with W and Fe, wherein W is > 25 wt%, > 50 wt%, > 75 wt%, > 90 wt%, or > 95 wt%, based on the total weight of the Fe and W.

According to another aspect, the invention provides a system for treating NOₓ in a lean burn exhaust gas comprising: a) a nitrogenous reducing agent injector, b) a dual function catalytic filter comprising (i) a soot filter having an inlet and an outlet, (ii) a soot oxidation zone on the inlet, wherein the soot oxidation zone comprises a soot oxidation catalytic component consisting essentially of at least one metal dispersed on a cerium and zirconium mixed and/or composite oxide, wherein the at least one metal is selected from the group consisting of W, Cr, Ce, Mn, Fe, Co, Ni, Cu, and combinations thereof, and (iii) an SCR zone coated on the outlet, wherein the SCR zone comprises an SCR catalytic component, wherein said injector is disposed upstream of, and is in fluid communication with, said dual function catalytic filter. In certain preferred embodiments, the system further comprises a diesel oxidation catalyst disposed upstream of the injector, one or more flow-through SCR catalysts disposed downstream of the dual function catalytic filter, and an ammonia slip catalyst disposed downstream of the flow-through SCR catalyst(s).

According to yet another aspect, the invention provides a method for treating a lean burn exhaust gas comprising: flowing a lean burn exhaust gas stream comprising soot, NOx, and a nitrogenous reducing agent through a dual function catalytic filter comprising (i) a soot filter having an inlet and an outlet, (ii)a soot oxidation zone on the inlet, wherein the soot oxidation zone comprises a soot oxidation catalytic component consisting essentially of at least one metal dispersed on a cerium and zirconium mixed and/or composite oxide, wherein the at least one metal is selected from the group consisting of W, Cr, Ce, Mn, Fe, Co, Ni, Cu, and combinations thereof, and (iii) an SCR zone coated on the outlet, wherein the SCR zone comprises an SCR catalytic component,(b) oxidizing at least a portion of the soot at the soot oxidation zone; and (c) reducing at least a portion of said NOₓ at the SCR catalyst zone.

In another embodiment of the invention, the CSF and SCR functions on the filter is performed by the same washcoat formulation. In this embodiment, the multifunctional catalyst component is coated on diesel particulate filters and will allow the coated filter to act both as a NH₃ SCR catalyst and promote the combustion of soot by lowering the temperature for the ignition of the C-O₂ reaction.

The respective orientation of the soot oxidation zone and the SCR zone are not particularly limited provided that a majority of the targeted particulate matter contacts the soot oxidation zone in a manner sufficient for soot combustion. Thus, in certain embodiments the two zones partially or completely overlap. In other embodiments, the two zones converge between the inlet and outlet, while in other embodiments they are spatially separated. The zones on the inlet and outlet may exist as a coating on the surface of the filter substrate or may diffuse or permeate into all or a portion of the filter substrate. In a particularly preferred embodiment, the soot oxidation zone and the SCR zone permeate into opposite sides of the wall of a wall-flow filter. That is, the soot oxidation zone is created via the soot oxidation catalyst permeating into the wall from the inlet channel side of the wall and the SCR zone is created via the SCR catalyst permeating into the wall from the outlet channel side of the wall.

In certain preferred embodiments, the soot oxidation catalyst component consists essentially of at least one metal dispersed on a mixed oxide or composite oxide or a mixture thereof as support material consisting of cerium and zirconium; or cerium oxide and zirconium oxide as single oxides or a composite oxide thereof, whereon is dispersed at least one metal selected from the group consisting of W, Cr, Ce, Mn, Fe, Co, Ni, Cu and combinations thereof. Preferred metals are Fe, W, Ce and Cu with Fe and W being particularly preferred. Preferably, the content of cerium and zirconium as oxides (CeO₂-ZrO₂) in the catalyst is CeₓZr₁₋ₓO₂, wherein x is 0.01 to 0.90. Preferably, x is < 0.5, e.g., from 0.1 to 0.49, or from 0.1 to 0.4, or from 0.1 to 0.2.

The mixed oxides can be mixed oxides in solid solutions. "Composite oxide" as defined herein means a largely amorphous oxide material comprising oxides of at least two elements which are not true mixed oxides consisting of the at least two elements.

In another embodiment, the base metal catalyst consists of two or more metals selected from the group consisting of W, Cr, Ce, Mn, Fe, Co, Ni and Cu. In a preferred embodiment, the metal components of the base metal catalyst consist of iron and tungsten. An issue with ceria-based catalysts is that they can be deactivated by sulfur. However, binary combinations of metals including tungsten, such as tungsten and iron, improves the sulfur tolerance of the non-tungsten metal in the combination, in this case the Fe.

The total metal concentration present in the catalyst can be from 0.01 to 50 wt%, e.g. from 0.1 to 30 wt%, from 0.5 to 20 wt%, from 1 to 10 wt%, from 5 to 15 wt%, or from 2 to 5 wt% based on the total weight of the catalyst.

The total amount of soot oxidation catalyst component in the soot oxidation zone will depend on the particular application, but could comprise 0.1 to 15 g/in³ (6.1-915.4 g/l), 1 to 7 g/in³ (6.1-427.2 g/l), 1 to 5 g/in³ (6.1-305.1 g/l), 2 to 4 g/in³ (122.0-244.1 g/l), or 3 to 5 g/in³ (183.1-305.1 g/l) of the soot oxidation catalyst component.

In certain embodiments, the soot oxidation catalyst component is supported on an inert oxide support selected from the group consisting of alumina, titania, non-zeolite silica-alumina, ceria, zirconia and mixtures, composite oxides and mixed oxides of any two or more thereof.

The soot oxidation catalyst composition can be applied to the filter substrate as an aqueous solution or as a washcoat slurry. Preferred washcoat loading for the soot oxidation catalyst is from 0.1 to 0.5 g/in³ (6.1-30.5 g/l).

Catalysts for use in the method according to the invention are obtainable by methods known to the person skilled in the art including impregnation of support materials with aqueous metal salts, incipient wetness or co-precipitation. For example, the soot oxidation catalyst component can be obtained by co-precipitating salts of tungsten, cerium and zirconium. In a further embodiment, the catalyst is obtained by co-precipitating cerium and zirconium salts, then impregnating the resulting product only with a tungsten salt and calcining at temperatures between <600°C. Whichever preparatory route is selected, it is desirable to activate the catalyst by heating in an existing environment, e.g. in air, to elevated temperatures for an appropriate period, e.g. at >600°C such as at 650°C and above or at 700°C and above. This heat activation step is particularly desirable for a catalyst consisting of iron and tungsten dispersed on zirconia.

The SCR catalyst for use on the diesel particulate filter is not particularly limited. Preferred SCR catalyst compositions include a catalyst support material and a metal. Examples of suitable catalyst support materials include alumina, aluminosilicates such as zeolites, silicoaluminophosphate, aluminophosphates, or other molecular sieve, or a mixed phase molecular sieve such as AEI/CHA, AEI/SAV, AEN/UEI, AFSBPH, BEC/ISV, ITE/RTH, KFI/SAV, MTT/TON, SBS/SBT, and SSF/STF, titania, ceria, zirconia, vanadate, lanthana, or mixed oxide base materials. Particularly preferred support materials include aluminosilicate and aluminophosphate molecular sieves having a CHA, LEV, ERI, AEI, UFI, or DDR framework. Examples of suitable metals include Cu, Pb, Ni, Zn, Fe, Sb, W, Ce, Mo, Tn, Mg, Co, Bi, Cd, Ti, Zr, Sb, Mg, Cr, V, Ni, Ga, Ru, Rh, Pd, Ag, In, Sn, Re, Ir, Pt, and mixtures thereof, dispersed with the catalyst support material. In certain embodiments, preferred metals include vanadium (V), tungsten (W), iron (Fe), and copper (Cu), and mixtures thereof. In some embodiments, preferred SCR catalysts include copper loaded small pore molecular sieves such as chabazites having extra-framework (e.g., ion-exchanged) or free copper, including Cu:SSZ-13 and Cu:SAPO-34. Other useful SCR catalysts include Fe:Beta, Cu:ZSM5, and Cu:ZSM-34. In certain embodiments, Cu:CHA SCR catalysts are particularly preferred.

A particularly preferred SCR catalyst for the present invention is W-CeO₂-ZrO₂ or FeW-CeO₂-ZrO₂. Applicants have found that modification of such catalyst will enable it to perform NH₃-SCR whilst lowering the ignition temperature of the C-O₂ reaction. In particular, it has been discovered that CexZr₁₋ₓO₂, wherein x is 0.1 to 0.99 is active for promoting the C-O₂ reaction, and by doping these materials with W their activities for the SCR reaction are enhanced. Accordingly, in certain embodiments, the invention pertains to W-CeO₂-ZrO₂ and/or Fe-W-CeO₂-ZrO₂ catalyst systems with the ability to perform both NOₓ reduction reaction with NH₃ and soot oxidation with O₂. In a particularly preferred embodiment, the SCR catalyst component has a formula Fe-W:Ce_{x'}O₂Zr_{1-x'}O₂, wherein x' = 0.1 to 0.99. The W, Fe, and Zr loadings on these materials can be optimized to achieve this dual functionality.

Certain SCR catalyst compositions are typically applied to the filter as a washcoat slurry. Other SCR catalyst compositions can be applied to the filter as an aqueous solution.

The total amount of SCR catalyst component in the SCR zone will depend on the particular application, but could comprise 0.1 to 15 g/in³ (6.1-915.4 g/l), 1 to 7 g/in³ (6.1-427.2 g/l), 1 to 5 g/in³ (6.1-305.1 g/l), 2 to 4 g/in³ (122.0-244.1 g/l), or 3 to 5 g/in³ (183.1-305.1 g/l) of the SCR catalyst. Preferred washcoat loading for the SCR catalyst is from 0.1 to 0.5 g/in³ (6.1-30.5 g/l).
In a preferred embodiment, the soot oxidation catalyst and SCR catalyst are present in a ratio of 1:25 to 1:2, e.g., from 1:10 to 1:5. In certain embodiments having such ratios of soot oxidation catalyst to SCR catalyst, the soot oxidation catalyst and SCR catalyst have the same or similar formulations. For example, the soot oxidation catalyst and SCR catalyst can both be either W-CeO₂-ZrO₂ and/or Fe-W-CeO₂-ZrO₂, wherein the inlet side of the filter is coated with less catalyst composition compared to the outlet side of the filter. In certain other embodiments, the soot oxidation catalyst and the SCR catalyst have similar formulations except that the relative ratios of the W:Fe and/or CeO₂:ZrO₂ are different. In particularly preferred embodiments, the soot oxidation catalyst component has a formula W:CeₓO₂Zr₁₋ₓO₂, wherein x = 0.1 to 0.9 and the SCR catalyst component has a formula Fe-W:Ce_{x'}O₂Zr_{1x'}O₂, wherein x' = 0.1 to 0.99. Preferably, x is less than 0.5 and x' is greater than 0.5. In the SCR catalyst component, preferably the W:Fe ratio of greater than 0.5.

The soot catalyst and the SCR catalyst can include other, non-catalytic components such as carriers, binders, stabilizers, and promoters. These additional components do not necessarily catalyse the desired reaction, but instead improve the catalytic material's effectiveness, for example by increasing its operating temperature range, increasing contact surface area of the catalyst, etc. Accordingly, a catalyst zone comprising a catalytic component can also include additional, non-catalytic components as well. Examples of such optional, non-catalytic components can include non-doped alumina, titania, non-zeolite silica-alumina, ceria, and zirconia that are present in the catalyst composition, but serve one or more non-catalytic purposes.

The type of DPF substrate for use in the present invention is not particularly limited provided that the filter is a suitable substrate for a soot oxidation zone and SCR zone as described herein, and has suitable physical properties, such as porosity, mean pore size, etc., that are compatible with the soot oxidation and SCR zones. Suitable DPF can include nonwoven fibrous filters and metallic or cordierite honeycombs, as well as other types of diesel particulate filters. Preferred filter substrates for use in mobile application are monoliths having a so-called honeycomb geometry which comprises a plurality of adjacent, parallel channels, each channel typically having a square, round, hexagonal, or triangular cross-sectional. The honeycomb shape provides a large catalytic surface with minimal overall size and pressure drop. Other substrates include sheets or screens that can be zoned in any suitable fashion including, for example, stacking, rolling, or arraying a central axis. Other substrates include packed beds which can be formed with pellets of the adsorbent, preferably held together with a binder or sintered to form a cohesive mass.

Soot filters for use in the present invention can be fabricated using a variety of materials including sintered metal, ceramic or metal fibres, etc. A preferred type of filter is a so-called "wall-flow" filter made from porous ceramic or other material in the form of a monolithic array of many small channels running substantially parallel over a majority of the length of the filter body, and wherein the channels are capped at alternate ends in a checkerboard fashion. Specific materials of construction for wall-flow monoliths include cordierite, α-alumina, silicon carbide, silicon nitride, zirconia, mullite, spodumene, alumina-silica-magnesia or zirconium silicate, ceramic composite fibres, or a porous refractory metal. Preferred materials include cordierite, silicon carbide, and alumina titanate.

Capping or plugging alternate ends of the channels of the wall-flow filter forces the exhaust gas through the porous ceramic channel walls. Although porous, these wall prevent most of the particulate from passing through. That is, exhaust gas untreated by the catalytic filter flows into the substrate channels (i.e., the filter inlet) where it contacts the upstream side of a substrate wall. During operation of an engine, a pressure differential exists between the inlet and outlet faces of the substrate (higher pressure at the inlet face relative to the outlet face), and thus a pressure differential also exists between the upstream side and downstream side of the substrate wall. This pressure differential, along with the gas permeable nature of the walls, allows the exhaust gas that flows into a channel which is open to the inlet face, to pass from the upstream side of a porous wall to the downstream side of that wall, and then into an adjacent channel (i.e., filter outlet) which is open to the downstream section of the exhaust system. Wall flow filters useful in the present invention have up to 700 channels (cells) per square inch (108.5 cells cm⁻²) of cross section. In one embodiment, the wall-flow filter contains 100 to 400 cells per square inch ("cpsi") (15.5-62.0 cells cm⁻²).

The actual shape and dimensions of the filter substrate, as well as properties such as channel wall thickness, its porosity, etc., depend on the particular application of interest. However, in certain embodiments, the average dimensions of the pores in the filter channel walls of the ceramic wall-flow filter through which the exhaust gas passes range from 5 to 50µm, for example 15 to 30µm. In other embodiments, the mean pore size of the filter is 10 to 200nm. In certain embodiments, wall-flow filters have a porosity of 30 to 40%. In other embodiments, the wall-flow filter has a porosity of at least 40% (e.g., from 45% to 75%) having a mean pore size of at least 5 microns (e.g., from 5 to 30 microns) and preferably at least 55% (e.g., from 55% to 75%).

Wall flow filters for use with the present invention preferably have an efficiency of least 70%, at least 75%, at least 80%, or at least 90%. In certain embodiments, the efficiency will be from 75 to 99%, 75 to 90%, 80 to 90%, or 85 to 95%. Here, efficiency is relative to soot and other similarly sized particles and to particulate concentrations typically found in conventional diesel exhaust gas. For example, particulates in diesel exhaust can range in size from 0.05 microns to 2.5 microns. Thus, the efficiency can be based on this range or a sub-range, such as 0.1 to 0.25 microns, 0.25 to 1.25 microns, or 1.25 to 2.5 microns. Preferred porosity for cordierite filters is from 60 to 75 %.

During normal operation of the exhaust system, the soot and other particulates accumulate on the upstream sides of the walls which lead to an increase in backpressure. To alleviate this increase in backpressure, the filter substrates are continuously or periodically regenerated by combusting the accumulated soot. The combustion process is promoted by the soot oxidation catalyst zone. Exhaust gas passing through the porous substrate walls also contacts the SCR catalyst embodied in the walls, thus eliminating a major portion of the NOₓ components from the exhaust gas.

The soot oxidation zone and SCR zone can be incorporated into the soot filter by any practical means. For example, the inlet channels of a wall-flow soot filter can be dipped into a soot oxidation catalyst composition at a depth and for a period of time that will allow the soot oxidation catalyst composition to permeate the filter walls to a certain depth and/or concentration. Additional techniques, such as application of pressure or a vacuum, can be used to promote adequate, even, and/or more rapid permeation of a particular coating. After the soot oxidation catalyst composition permeates the inlet of the wall-flow filter, the filter is dried and then the outlet channels of the filter are dipped into an SCR catalyst composition at a depth and for a period of time that will allow the SCR catalyst composition to permeate the filter walls to a certain depth and/or concentration. Again, additional techniques, such as application of pressure or a vacuum, can be used to promote adequate, even, and/or more rapid permeation of a particular coating. The SCR zone is then dried. One or more of the dipping processes can be repeated to achieve the desired coating level. After acceptable catalyst loadings are obtained, the catalytic coating is activated, preferably at a temperature of 100°C to 300°C for 1 to 3 hours. The activated filter is calcined to remove additional moisture at a temperature of 450°C to 550°C for 1 to 3 hours. The drying and calcining steps are preferably performed as per standard CSF preparation conditions.

In the system according to the present invention, the article according to the present invention is in fluid communication with an injector or other device for introducing a nitrogenous reductant into the exhaust gas, wherein the injector or other device is disposed upstream of the filter. The inventors have discovered that the soot oxidation zone of the filter will not consume a nitrogen-based reductant (urea, ammonia, etc.) which is required for the downstream SCR reaction. Therefore, the present invention allows a reductant to be dosed into the exhaust gas upstream of the filter containing the soot oxidation catalyst. In use, the system carries a flowing exhaust gas stream generated by a lean burn internal combustion engine, wherein the system comprises one or more conduits for carrying the flowing exhaust gas, wherein the conduits provide fluid connection between the article according to the invention and nitrogenous reducing agent injector.

The injector can continuously, periodically, or intermittently introduce the reductant, such gaseous ammonia, ammonia in aqueous solution, aqueous urea, or ammonia from an ammonia generator, into the exhaust gas at a dose effective for optimization of the downstream SCR reaction. The injector is in fluid communication with the exhaust gas stream and may be attached, connected to, and/or integrated with a conduit, such as a pipe, for directing the exhaust through at least a portion of the exhaust gas system. The injector may also be in fluid communication with a reduction agent supply tank to provide for repeated injections of the reduction agent.

In a particular embodiment, metering is controlled in response to the quantity of nitrogen oxides in the exhaust gas determined either directly (using a suitable NOₓ sensor) or indirectly, such as using pre-correlated look-up tables or maps - stored in the control means - correlating any one or more of the abovementioned inputs indicative of a condition of the engine with predicted NOₓ content of the exhaust gas. The metering of the nitrogenous reductant can be arranged such that 60% to 200% of theoretical ammonia is present in exhaust gas entering the SCR catalyst calculated at 1:1 NH₃/NO and 4:3 NH₃/NO₂. The control means can comprise a pre-programmed processor such as an electronic control unit (ECU). Controlling the metering involves limiting the introduction of the nitrogenous reductant into the flowing exhaust gas only when it is determined that the SCR catalyst is capable of catalysing NOₓ reduction at or above a desired efficiency, such as at above 100 °C, above 150 °C or above 175 °C. The determination by the control means can be assisted by one or more suitable sensor inputs indicative of a condition of the engine selected from the group consisting of: exhaust gas temperature, catalyst bed temperature, accelerator position, mass flow of exhaust gas in the system, manifold vacuum, ignition timing, engine speed, lambda value of the exhaust gas, the quantity of fuel injected in the engine, the position of the exhaust gas recirculation (EGR) valve and thereby the amount of EGR and boost pressure.

In certain preferred embodiments, the injector is disposed upstream of the dual function catalytic filter with no intervening SCR or other catalytic components between the injector and the filter. That is, the NH₃ in the exhaust stream is not consumed or otherwise utilized after it enters the exhaust gas stream and prior to contacting the SCR zone of the filter.

In another embodiment, all or at least a portion of the nitrogen-based reductant, particularly NH₃, can be supplied by a NOₓ adsorber catalyst (NAC), a lean NOₓ trap (LNT), or a NOₓ storage/reduction catalyst (NSRC), disposed upstream of the dual function catalytic filter. One of the functions of the NAC in the present invention is to provide a source of NH₃ for the downstream SCR reaction. Accordingly, the NAC is configured in the system in a manner similar to that of the injector - i.e., upstream of the dual function catalytic filter and preferably with no intervening SCR or other catalytic components between the NAC and the filter. NAC components useful in the present invention include a catalyst combination of a basic material (such as alkali metal, alkaline earth metal or a rare earth metal, including oxides of alkali metals, oxides of alkaline earth metals, and combinations thereof), and a precious metal (such as platinum), and optionally a reduction catalyst component, such as rhodium. Specific types of basic material useful in the NAC include caesium oxide, potassium oxide, magnesium oxide, sodium oxide, calcium oxide, strontium oxide, barium oxide, and combinations thereof. The precious metal is preferably present at 10 to 200 g/ft³ (0.35-7.06 g/l), such as 20 to 60 g/ft³ (0.71-2.12 g/l). Alternatively, the precious metal of the catalyst is characterized by the average concentration which may be from 40 to 100 grams/ft³ (1.41-3.53 g/l).

Under certain conditions, during the periodically rich regeneration events, NH₃ may be generated over a NOₓ adsorber catalyst. The SCR catalyst downstream of the NOₓ adsorber catalyst may improve the overall system NOₓ reduction efficiency. In the combined system, the SCR catalyst is capable of storing the released NH₃ from the NAC catalyst during rich regeneration events and utilizes the stored NH₃ to selectively reduce some or all of the NOₓ that slips through the NAC catalyst during the normal lean operation conditions.

In certain embodiments, the system further comprises a diesel oxidation catalyst (DOC) to oxidize hydrocarbon based soluble organic fraction (SOF) and carbon monoxide content of diesel exhaust by simple oxidation:

CO + _{½}O₂ → CO₂

[HC] + O₂ → CO₂ + H₂O

The DOC may also serve to oxidize NO into NO₂, which in turn, may be used to oxidize particulate matter in particulate filter. Additionally, the DOC may serve to reduce the particulate matter (PM) in the exhaust gas.

Preferably, the DOC is disposed upstream of the upstream of the dual function catalytic filter, and more preferably upstream of the SCR reductant injector or NAC.

In a further embodiment, the system comprises an oxidation catalyst for oxidizing nitrogen monoxide in the exhaust gas to nitrogen dioxide, which can be located upstream of a point of metering the nitrogenous reductant into the exhaust gas. In one embodiment, the oxidation catalyst is adapted to yield a gas stream entering the SCR zeolite catalyst having a ratio of NO to NO₂ of from 4:1 to 1:3 by volume, e.g. at an exhaust gas temperature at oxidation catalyst inlet of 250 °C to 450 °C. In another embodiment, the system further comprises a Closed Coupled Catalyst (CCC) upstream of the DOC.

The oxidation catalyst can include at least one platinum group metal (or some combination of these), such as platinum, palladium, or rhodium, coated on a flow-through monolith substrate. Other metal catalysts that can be used in the DOC include aluminium, barium, cerium, alkali metals, alkaline-earth metals, rare-earth metals, or any combinations thereof In one embodiment, the at least one platinum group metal is platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia. In a preferred embodiment, the diesel oxidation catalyst composition contains 10 to 120 g/ft³ (0.35-4.24 g/l) of a platinum group metal (e.g., platinum, palladium or rhodium) dispersed on a high surface area, refractory oxide support (e.g., γ-alumina).

In certain system embodiments, one or more additional SCR catalyst components can be included in the system, preferably downstream of the article according to the invention, to further reduce the concentration of NOₓ in the exhaust gas. For example, upon exiting the dual function catalytic filter, the exhaust gas passes through a flow-through substrate coated with an SCR catalyst. Thus, the flow-through SCR catalyst is disposed downstream of the dual function catalytic filter. The NOₓ concentration of the exhaust gas is reduced as the gas passes through the dual function catalytic filter and then is further reduced as the gas sequentially passes through the one or more SCR flow-through substrates. In another embodiment, the system further comprises an additional reductant injector upstream of the SCR flow-through catalyst and downstream of the dual function catalytic filter. In certain embodiments, the one or more downstream SCR flow-through catalysts are extruded articles.

The number of additional SCR catalyst flow-through components can be of any practical number, such as 1, 2, 3, or 4. The downstream SCR catalyst(s) may be the same or different from the SCR catalyst coated on the dual function catalytic filter. In certain embodiments, preferred SCR catalysts include copper loaded small pore molecular sieves such as chabazites having extra-framework or free copper, including Cu:SSZ-13 and Cu:SAPO-34.

In certain embodiments, the system further comprises an ammonia slip catalyst disposed downstream of the dual function catalytic filter, and in some embodiments, downstream of the flow-through SCR components. The ASC serves to oxidize most, if not all, of the ammonia prior to emitting the exhaust gas into the atmosphere or passing the exhaust gas through a recirculation loop prior to exhaust gas entering/re-entering the engine. Thus, the ASC reduces the concentration of ammonia slip from the SCR reaction, the release of ammonia from the catalyst surface during rapid temperature increases, or from the use of a stoichiometric excess of reductant. Preferably, the ASC material should be selected to favour the oxidation of ammonia instead of the formation of NOₓ or N₂O. Preferred catalyst materials include platinum, palladium, or a combination thereof, with platinum or a platinum/palladium combination being preferred. Preferably, the catalyst is disposed on a high surface area support, including but not limited to alumina. In certain embodiments, the ASC is applied to a substrate, preferably substrates that are designed to provide large contact surface with minimal backpressure, such as flow-through metallic or cordierite honeycombs. For example, a preferred substrate has between 25 and 300 cells per square inch (cpsi) (3.9-46.5 cells cm⁻²) to ensure low backpressure. Achieving low backpressure is particularly important to minimize the ASC's effect on the low-pressure EGR performance. The ASC can be applied to the substrate as a washcoat, preferably to achieve a loading of 0.3 to 2.3 g/in³ (18.3-140.4 g/l). To provide further NOₓ conversion, the front part of the substrate can be coated with just SCR coating, and the rear coated with SCR and an NH₃ oxidation catalyst such as Pt or Pt/Pd on an alumina support.

Another aspect of the invention relates to a method as defined hereinabove, whereby nitrogen oxides are reduced with a nitrogenous reducing agent, preferably at a temperature of at least 100°C, such as from 150°C to 750°C. The method comprises the steps of flowing a lean burn exhaust gas containing soot, NOₓ, and a nitrogenous reducing agent, preferably NH₃, through a dual function catalytic filter of the present invention wherein the exhaust gas exiting the filter has a reduced concentration of soot and NOₓ compared to the exhaust gas flowing into the filter. The method may further comprise one or more of the following steps: (a) accumulating and/or combusting soot that is in contact with the inlet of the dual function catalytic filter; (b) introducing a nitrogenous reducing agent into the exhaust gas stream prior to contacting the dual function catalytic filter, preferably with no intervening catalytic steps involving the treatment of NOₓ and the reductant; (c) generating NH₃ over a NOₓ adsorber catalyst, and preferably using such NH₃ as a reductant in a downstream SCR reaction; (d) contacting the exhaust gas stream with a DOC to oxidize hydrocarbon based soluble organic fraction (SOF) and/or carbon monoxide into CO₂, and/or oxidize NO into NO₂, which in turn, may be used to oxidize particulate matter in particulate filter; and/or reduce the particulate matter (PM) in the exhaust gas; (e) contacting the exhaust gas with one or more flow-through SCR catalyst device(s) in the presence of a reducing agent to further reduce the NOₓ concentration in the exhaust gas, wherein the one or more flow-through SCR catalyst device(s) are preferably disposed downstream of the dual function catalytic filter; and (f) contacting the exhaust gas with an ammonia slip catalyst, preferably downstream of the dual function catalytic filter and, if present, the one or more flow-through SCR catalyst devices to oxidize most, if not all, of the ammonia prior to emitting the exhaust gas into the atmosphere or passing the exhaust gas through a recirculation loop prior to exhaust gas entering/reentering the engine.

In a particular embodiment, the temperature range for the SCR reaction is from 175 to 550 °C. In another embodiment, the temperature range is from 175 to 400 °C. In yet another embodiment, the temperature range is 450 to 900 °C, preferably 500 to 750 °C, 500 to 650 °C, 450 to 550 °C, or 650 to 850 °C. In a particular embodiment, the nitrogen oxides reduction is performed in the presence of oxygen. In the method according to the invention, the addition of nitrogenous reductant can be controlled so that NH₃ at the catalyst inlet is controlled to be 60% to 200% of theoretical ammonia calculated at 1:1 NH₃/NO and 4:3 NH₃/NO₂. In certain embodiments, the ratio of nitrogen monoxide to nitrogen dioxide in the catalyst inlet gas is from 4:1 to 1:3 by volume. In this regard, the ratio of nitrogen monoxide to nitrogen dioxide in the gas can be adjusted by oxidizing nitrogen monoxide to nitrogen dioxide using an oxidation catalyst located upstream of the catalyst.

The nitrogenous reducing agent can be derived from any suitable source including ammonia *per se,* hydrazine or an ammonia precursor selected from the group consisting of urea ((NH₂)₂CO), ammonium carbonate, ammonium carbamate, ammonium hydrogen carbonate and ammonium formate. NH₃ can also be supplied by a lean NOₓ trap or similar device disposed upstream of the dual function filter.

The method can be performed on a gas derived from a combustion process, such as from an internal combustion engine (whether mobile or stationary), a gas turbine and coal or oil fired power plants. The method may also be used to treat gas from industrial processes such as refining, from refinery heaters and boilers, furnaces, the chemical processing industry, coke ovens, municipal waste plants and incinerators. In a particular embodiment, the method is used for treating exhaust gas from a vehicular lean burn internal combustion engine, such as a diesel engine, a lean-burn gasoline engine or an engine powered by liquid petroleum gas or natural gas.

In order that the invention may be more fully understood, embodiments and Examples will now be described by way of illustration only and with reference to the accompanying drawings, in which:
Figure 1 is a diagram of a soot filter according to an embodiment of the present invention, the filter having an inlet coated with a soot oxidation catalyst zone and an outlet coated with an SCR catalyst zone;
Figure 2 is a diagram of a wall-flow soot filter according to an embodiment of the present invention, the filter having an inlet coated with a soot oxidation catalyst zone and an outlet coated with an SCR catalyst zone;
Figure 3 is a diagram showing a system with a configuration of components according to an embodiment of the present invention;
Figure 4 is a graph depicting soot oxidation performance of an embodiment of the invention;
Figure 5 is a graph depicting NOₓ conversion performance of an embodiment of the invention;
Figure 6 is a graph depicting NOₓ conversion performance of an embodiment of the invention;
Figure 7 is a graph depicting back pressure performance of an embodiment of the invention;
Figure 8 is a graph depicting SCR performance of certain embodiments of the invention; and

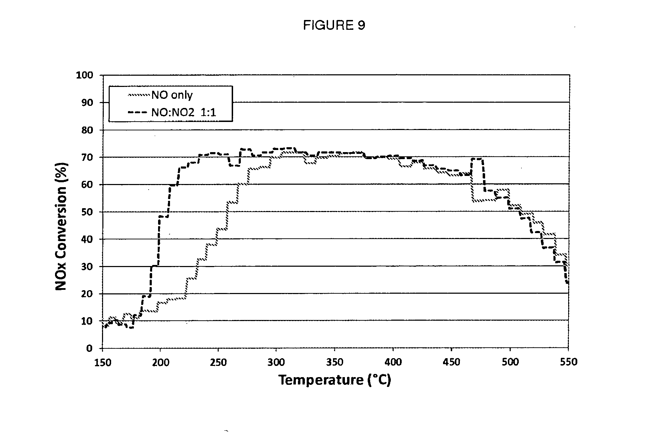

Figure 9 is a graph depicting NOₓ conversion performance of an embodiment of the invention.

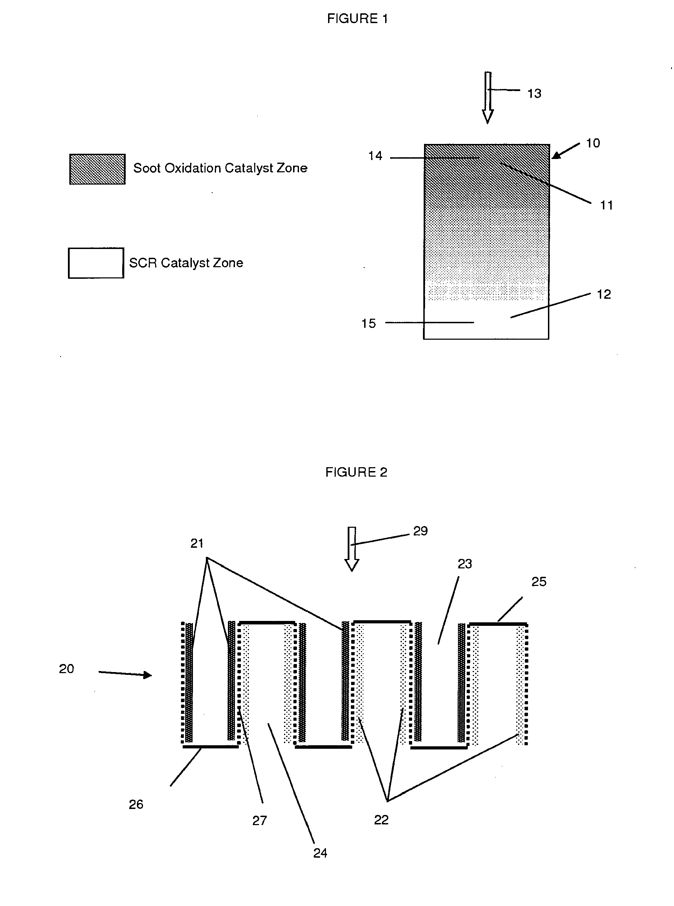

In a first aspect, the invention is directed to a dual purpose catalytic filter that is capable of removing soot and NOₓ from a lean burn exhaust gas. Turning to Figure 1, shown is an embodiment of the invention comprising a soot filter 10, such as a diesel particular filter, having an inlet 14 and an outlet 15 relative to the direction of exhaust gas flow 13 through the filter. The filter inlet comprises a soot oxidation zone 14, while the filter outlet comprises an SCR zone 15. As used herein, the term "zone" means a distinct catalytic area within and/or on the filter substrate. For example, a zone can be an area of the filter substrate in which a catalyst has permeated or a catalyst layer residing on top of and/or within filter substrate. The zone can be a discrete area, completely separated from other zones, can be adjacent to, or overlap with, other zones, or can be partially fused into other zones. The term "inlet" means the side, face, surface, channel, and/or portion of the filter into which an exhaust gas typically flows from an external source. The term "outlet" means the side, face, surface, channel, and/or portion of the filter from which an exhaust gas typically exits the filter. The phrase "on the inlet" and "on the outlet", with respect to the orientation of a catalytic zone and a filter substrate, is meant to include a catalyst residing as a zone or layer on top of the substrate face and/or within the substrate walls (i.e., within the pores of the substrate walls).

Figure 2 shows a wall-flow filter 20 having inlet channels 23 and outlet channels 24 which are defined by a gas permeable walls 27 and gas impermeable inlet caps 25 and outlet caps 26. Exhaust gas having a direction of flow 29 enters the filter 20 via one or more of the inlet channels 23, passes through the gas permeable walls 27 which separate the inlet and outlet channels, and then exits the filter via the outlet channels 24. The exhaust gas entering the inlet channels typically comprises soot, NOₓ, and preferably also contains a nitrogenous reducing agent, such as NH₃, which is used to convert the NOₓ into other gases via an SCR reaction. As the exhaust gas passes through the gas permeable wall, at least a portion of the particulate matter in the exhaust gas is trapped at the inlet where it contacts the soot oxidation zone. The soot oxidation zone facilitates a low-temperature oxidation reaction wherein solid, carbonaceous particles of the soot are converted into gases, such as CO₂ and water vapour, which then pass through the gas permeable filter wall. As the exhaust gas passes through the SCR catalyst zone, at least a portion of the NOₓ reacts with NH₃ in the presence of the SCR catalyst, wherein the NOₓ is reduced to N₂ and other gases.

### EXAMPLES

The following non-limiting examples are provided to further demonstrate particular aspect of certain embodiments of the invention.

### Example 1:

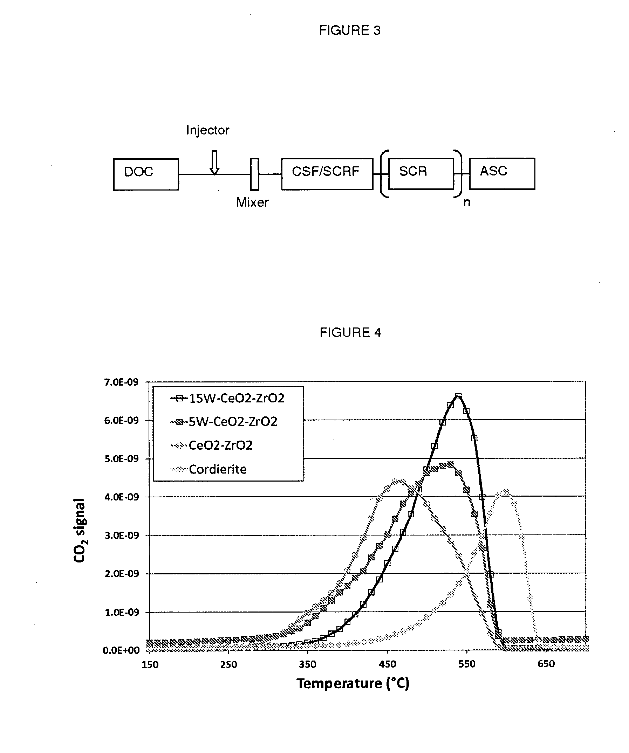

Physical mixtures of simulated diesel exhaust gas soot and compositions of cordierite, CeO₂-ZrO₂, W-CeO₂-ZrO₂ (5 wt% W), W-CeO₂-ZrO₂ (15 wt% W), were prepared as powders. These powders were tested in a TPO type experiment whereby the mixture is ramped in a gas mixture containing He and 5% O₂. The soot ignition temperature is measured by the CO₂ formation. The results of these tests are provide in Figure 4. In particular, the Cex Zr ₁₋ₓ O₂ (x=1.0) promotes the oxidation of soot and the ignition temperature is decreased from a temperature of 600 °C in absence of the catalyst to a temperature of 450 °C. The presence of W lowers the reactivity slightly.

### Example 2:

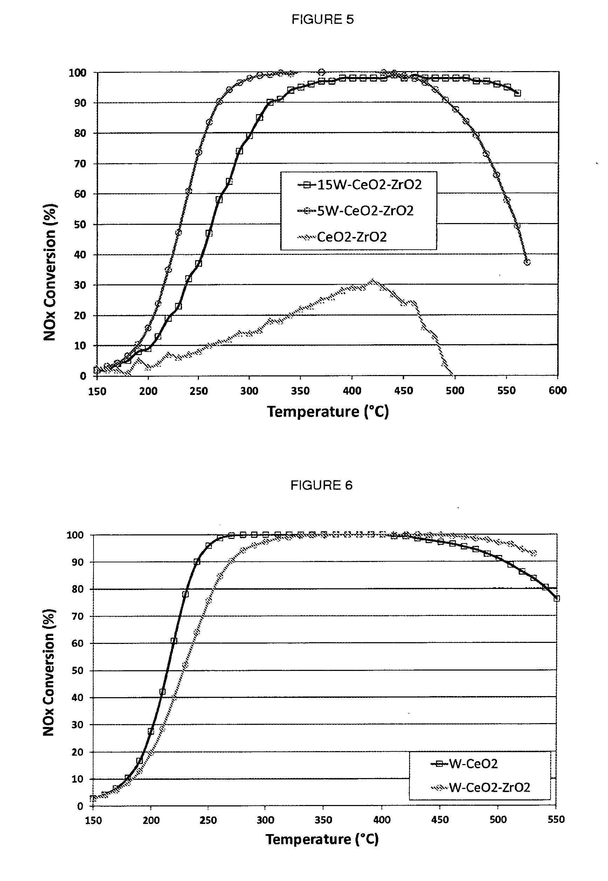

Compositions of CeO₂-ZrO₂, W-CeO₂-ZrO₂ (5 wt% W), W-CeO₂-ZrO₂ (15 wt% W), were prepared as powders. These powders were tested in a microreactor to determine the effect of tungsten on the NOₓ reduction activity of CeO₂-ZrO₂. The results of these tests are provide in Figure 5. As the results show, the presence of W enhances the NOₓ reduction activity of CeO₂-ZrO₂.

### Example 3:

Compositions of W-CeO₂-ZrO₂ and W-CeO₂ were prepared as powders. These powders were tested in a microreactor to determine the effect of ZrO₂ on NOₓ reduction activity. The results of these tests are provided in Figure 6. As the results show, a W- CeO₂ catalyst is effective for NOₓ reduction.

### Example 4:

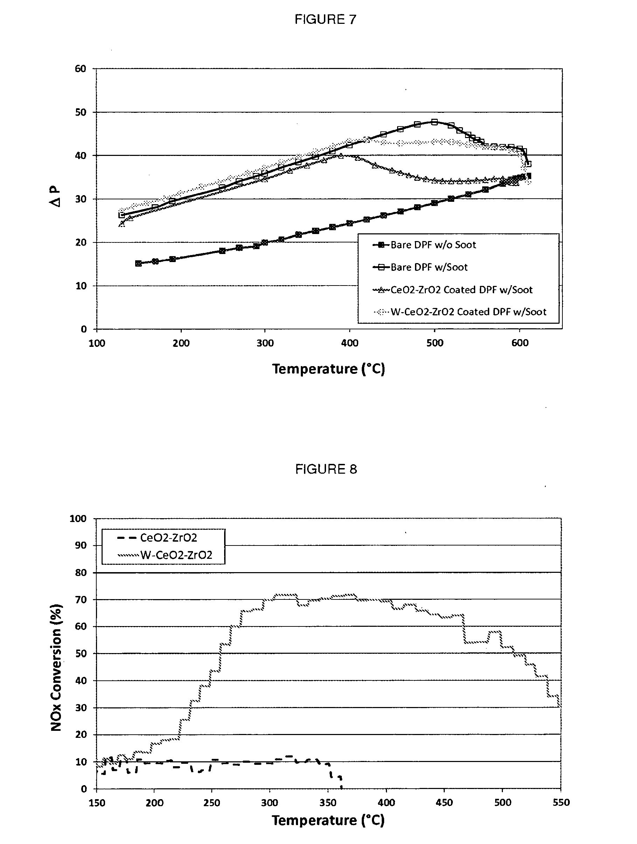

Compositions of CeO₂-ZrO₂ and W-CeO₂-ZrO₂ were coated on separate SiC flow through filter cores (linch (2.54 cm) diameter and 7 inch (17.78 cm) long) at a loading of 0.3g per cubic inch (18.3g/l). The soot oxidation activities of these coated filters were measured by first loading them with soot produced during combustion of US 06 Diesel fuel. The filter was loaded to 10-20 mg soot per cu inch (0.61-1.2 g/l). The soot oxidation experiment was done in a gas mixture of N₂ with 10% O₂ at a GHSV ∼ 60,000 hr⁻¹ monitoring the back pressure. The bare filter containing no catalyst and without any soot show an increase in back pressure with increasing temperature due to changes in kinetic energy of the gas. The bare filter loaded with soot showed a higher initial back pressure to the clean filter and then a drop in back pressure at a temperature of 550 °C caused by the oxidation of the soot. This drop in back pressure occurs at a lower temperature on the filter coated with the CeO₂-ZrO₂ and W- CeO₂-ZrO₂ catalyst due to their promotion of the soot combustion process. The results of this example are shown in Figure 7.

### Example 5:

The cores prepare in Example 4 were measured for their NH₃ SCR activities. The coated filter catalyst was measured in a gas mixture containing 500ppm NO, 500ppm NH₃, 5% CO₂, 5% H₂O, 10% O₂ and 300ppm CO. Although the CeO₂-ZrO₂ was inactive and unselective for reacting NOₓ with NH₃, the W-CeO₂-ZrO₂ catalyst shows high reactivity for the NH₃-SCR reaction. The results of this example are shown in Figure 8.

## Claims

1. An article for treating an exhaust gas comprising:
a) a soot filter having an inlet and an outlet,
b) a soot oxidation zone on the inlet, wherein the soot oxidation zone comprises a soot oxidation catalytic component consisting essentially of at least one metal dispersed on a cerium and zirconium mixed and/or composite oxide, wherein the at least one metal is selected from the group consisting of W, Cr, Ce, Mn, Fe, Co, Ni, Cu, and combinations thereof, and
c) an SCR zone coated on the outlet, wherein the SCR zone comprises an SCR catalytic component.

2. The article of claim 1, wherein the soot oxidation catalytic component is supported on an inert oxide selected from the group consisting of alumina, titania, non-zeolite silica-alumina, ceria, zirconia and mixtures, composite oxides and mixed oxides of any two or more thereof.

3. The article of claim 1, wherein said soot oxidation catalytic component has a formula of M:CeₓO₂Zr₁₋ₓO₂, wherein x = 0.1-0.9 and M is selected from W, Cr, Ce, Mn, Fe, Co, Ni, Cu, and combinations thereof.

4. The article of claim 3, wherein M is W and x is less than 0.5.

5. The article of claim 1, wherein the at least one metal is present in the soot oxidation catalyst component from 0.5 to 20 wt%, based on the total weight of the soot oxidation catalyst component.

6. The article of claim 1, wherein said soot oxidation zone comprises said soot oxidation component in an amount of 0.1 to 0.5 g/in³ (6.1-30.5 g/l).

7. The article of claim 1, wherein said SCR catalyst component comprises at least one metal selected from V, Cr, Ce, Mn, Fe, Co, Ni or Cu, wherein the metal is disposed on a support selected from aluminosilicate molecular sieves, silicoaluminophosphate molecular sieves, alumina, and mixed-oxide base material.

8. The article of claim 1, wherein said SCR catalyst component is a molecular sieve having a CHA framework and extra-framework copper.

9. The article of claim 1, wherein said soot oxidation catalyst component has a formula W:CeₓO₂Zr₁₋ₓO₂, wherein x = 0.1 to 0.9 and said SCR catalyst component has a formula Fe-W:Ce_{x'}O₂Zr_{1-x'}O₂, wherein x' = 0.1 to 0.99.

10. The article of claim 9 wherein x is less than 0.5 and x' is greater than 0.5.

11. The article of claim 9 wherein said SCR catalyst component has a W:Fe ratio of greater than 0.5.

12. The article of claim 1, wherein said soot oxidation catalyst component and said SCR catalyst component have the same formulation and wherein said soot oxidation catalyst component in the inlet and said SCR catalyst component in the outlet are present in a ratio of 1:25 to 1:2.

13. The article of claim 1, wherein said soot filter is a wall-flow filter.

14. A system for treating NOₓ in a lean burn exhaust gas comprising:
a) a nitrogenous reducing agent injector,
b) a dual function catalytic filter comprising
i. a soot filter having an inlet and an outlet,
ii. a soot oxidation zone on the inlet, wherein the soot oxidation zone comprises a soot oxidation catalytic component consisting essentially of at least one metal dispersed on a cerium and zirconium mixed and/or composite oxide, wherein the at least one metal is selected from the group consisting of W, Cr, Ce, Mn, Fe, Co, Ni, Cu, and combinations thereof, and
iii. an SCR zone coated on the outlet, wherein the SCR zone comprises an SCR catalytic component,
wherein said injector is disposed upstream of, and is in fluid communication with, said dual function catalytic filter.

15. A method for treating a lean burn exhaust gas comprising:
a) flowing a lean burn exhaust gas stream comprising soot, NOx, and a nitrogenous reducing agent through a dual function catalytic filter comprising
i. a soot filter having an inlet and an outlet,
ii. a soot oxidation zone on the inlet, wherein the soot oxidation zone comprises a soot oxidation catalytic component consisting essentially of at least one metal dispersed on a cerium and zirconium mixed and/or composite oxide, wherein the at least one metal is selected from the group consisting of W, Cr, Ce, Mn, Fe, Co, Ni, Cu, and combinations thereof, and
iii. an SCR zone coated on the outlet, wherein the SCR zone comprises an SCR catalytic component,
b) oxidizing at least a portion of the soot at the soot oxidation zone; and
c) reducing at least a portion of said NOₓ at the SCR catalyst zone.

## Patentansprüche

1. Artikel zur Behandlung eines Abgases, umfassend:
a) einen Rußfilter mit einem Einlass und einem Auslass,
b) eine Rußoxidationszone am Einlass, wobei die Rußoxidationszone eine rußoxidationskatalytische Komponente, die im Wesentlichen aus mindestens einem auf einem Cer- und Zirconium-Mischoxid und/oder -Verbundoxid verteilten Metall besteht, umfasst, wobei das mindestens eine Metall aus der Gruppe bestehend aus W, Cr, Ce, Mn, Fe, Co, Ni, Cu und Kombinationen davon ausgewählt ist, und
c) eine am Auslass aufgetragene SCR-Zone, wobei die SCR-Zone eine SCR-katalytische Komponente umfasst.

2. Artikel nach Anspruch 1, wobei die rußoxidationskatalytische Komponente auf einem inerten Oxid aus der Gruppe bestehend aus Aluminiumoxid, Titanoxid, nichtzeolithischem Siliciumdioxid-Aluminiumoxid, Ceroxid, Zirconiumoxid und Mischungen, Verbundoxiden und Mischoxiden von zwei oder mehr davon geträgert ist.

3. Artikel nach Anspruch 1, wobei die rußoxidationskatalytische Komponente die Formel M:CeₓO₂Zr₁₋ₓO₂ aufweist, wobei x = 0,1-0,9 und M aus W, Cr, Ce, Mn, Fe, Co, Ni, Cu und Kombinationen davon ausgewählt ist.

4. Artikel nach Anspruch 3, wobei M für W steht und x weniger als 0,5 beträgt.

5. Artikel nach Anspruch 1, wobei das mindestens eine Metall in der Rußoxidationskatalysatorkomponente in einer Menge von 0,5 bis 20 Gew.-%, bezogen auf das Gesamtgewicht der Rußoxidationskatalysatorkomponente, vorliegt.

6. Artikel nach Anspruch 1, wobei die Rußoxidationszone die Rußoxidationskomponente in einer Menge von 0,1 bis 0,5 g/in³ (6,1-30,5 g/l) umfasst.

7. Artikel nach Anspruch 1, wobei die SCR-Katalysatorkomponente mindestens ein Metall, das aus V, Cr, Ce, Mn, Fe, Co, Ni oder Cu ausgewählt ist, umfasst, wobei das Metall auf einem Träger, der aus Aluminiumsilikat-Molsieben, Silicium-aluminiumphosphat-Molsieben, Aluminiumoxid und Mischoxid-Basismaterial ausgewählt ist, angeordnet ist.

8. Artikel nach Anspruch 1, wobei es sich bei der SCR-Katalysatorkomponente um ein Molsieb mit einem CHA-Gerüst und Extra-Gerüst-Kupfer handelt.

9. Artikel nach Anspruch 1, wobei die Rußoxidationskatalysatorkomponente die Formel W:CeₓO₂Zr₁₋ₓO₂ aufweist, wobei x = 0,1-0,9, und die SCR-Katalysatorkomponente die Formel Fe-W:Ce_{x'}O₂Zr₁₋ₓO₂ aufweist, wobei x' = 0,1-0,9.

10. Artikel nach Anspruch 9, wobei x weniger als 0,5 beträgt und x' mehr als 0,5 beträgt.

11. Artikel nach Anspruch 9, wobei die SCR-Katalysatorkomponente ein W:Fe-Verhältnis von mehr als 0,5 aufweist.

12. Artikel nach Anspruch 1, wobei die Rußoxidationskatalysatorkomponente und die SCR-Katalysatorkomponente die gleiche Formulierung aufweisen und wobei die Rußoxidationskatalysatorkomponente im Einlass und die SCR-Katalysatorkomponente im Auslass in einem Verhältnis von 1:25 bis 1:2 vorliegen.

13. Artikel nach Anspruch 1, wobei es sich bei dem Rußfilter um einen Wandstromfilter handelt.

14. System zur Behandlung von NOₓ in einem Magerabgas, umfassend:
a) einen Injektor für stickstoffhaltiges Reduktionsmittel,
b) einen Dualfunktions-Katalysatorfilter, umfassend
i. einen Rußfilter mit einem Einlass und einem Auslass,
ii. eine Rußoxidationszone am Einlass, wobei die Rußoxidationszone eine rußoxidationskatalytische Komponente, die im Wesentlichen aus mindestens einem auf einem Cer- und Zirconium-Mischoxid und/oder -Verbundoxid verteilten Metall besteht, umfasst, wobei das mindestens eine Metall aus der Gruppe bestehend aus W, Cr, Ce, Mn, Fe, Co, Ni, Cu und Kombinationen davon ausgewählt ist, und
iii. eine am Auslass aufgetragene SCR-Zone, wobei die SCR-Zone eine SCR-katalytische Komponente umfasst,
wobei der Injektor stromaufwärts des Dualfunktions-Katalysatorfilters angeordnet ist und damit in Fließverbindung steht.

15. Verfahren zur Behandlung eines Magerabgases, umfassend:
a) das Durchleiten eines Magerabgasstroms, der Ruß, NOx und ein stickstoffhaltiges Reduktionsmittel umfasst, durch einen Dualfunktions-Katalysatorfilter, umfassend
i. einen Rußfilter mit einem Einlass und einem Auslass,
ii. eine Rußoxidationszone am Einlass, wobei die Rußoxidationszone eine rußoxidationskatalytische Komponente, die im Wesentlichen aus mindestens einem auf einem Cer- und Zirconium-Mischoxid und/oder -Verbundoxid verteilten Metall besteht, umfasst, wobei das mindestens eine Metall aus der Gruppe bestehend aus W, Cr, Ce, Mn, Fe, Co, Ni, Cu und Kombinationen davon ausgewählt ist, und
iii. eine am Auslass aufgetragene SCR-Zone, wobei die SCR-Zone eine SCR-katalytische Komponente umfasst,
b) das Oxidieren mindestens eines Teils des Rußes an der Rußoxidationszone; und
c) das Reduzieren mindestens eines Teils des NOₓ an der SCR-Katalysatorzone.

## Revendications

1. Article destiné à traiter un gaz d'échappement comprenant :
a) un filtre à suie ayant une entrée et une sortie,
b) une zone d'oxydation de suie sur l'entrée, la zone d'oxydation de suie comprenant un composant catalytique d'oxydation de suie essentiellement composé d'au moins un métal dispersé sur un oxyde mixte et/ou composite de cérium et de zirconium, l'au moins un métal étant choisi dans le groupe constitué par W, Cr, Ce, Mn, Fe, Co, Ni, Cu, et les combinaisons de ceux-ci, et
c) une zone SCR déposée sur la sortie, la zone SCR comprenant un composant catalytique SCR.

2. Article selon la revendication 1, dans lequel le composant catalytique d'oxydation de suie est supporté sur un oxyde inerte choisi dans le groupe constitué par l'alumine, le dioxyde de titane, la silice-alumine non zéolitique, l'oxyde de cérium, la zircone et les mélanges, oxydes composites et oxydes mixtes d'au moins deux quelconques d'entre eux.

3. Article selon la revendication 1, dans lequel ledit composant catalytique d'oxydation de suie a une formule M:CeₓO₂Zr₁₋ₓO₂, dans laquelle x = 0,1-0,9 et M est choisi parmi W, Cr, Ce, Mn, Fe, Co, Ni, Cu, et les combinaisons de ceux-ci.

4. Article selon la revendication 3, dans lequel M est W et x est inférieur à 0,5.

5. Article selon la revendication 1, dans lequel l'au moins un métal est présent dans le composant catalyseur d'oxydation de suie à 0,5 à 20 % en poids, rapporté au poids total du composant catalyseur d'oxydation de suie.

6. Article selon la revendication 1, dans lequel ladite zone d'oxydation de suie comprend ledit composant d'oxydation de suie dans une quantité de 0,1 à 0,5 g/in³ (6,1-30,5 g/l).

7. Article selon la revendication 1, dans lequel ledit composant catalyseur SCR comprend au moins un métal choisi parmi V, Cr, Ce, Mn, Fe, Co, Ni et Cu, le métal étant disposé sur un support choisi parmi les tamis moléculaires en aluminosilicate, les tamis moléculaires en silicoaluminophosphate, l'alumine, et un matériau à base d'oxyde mixte.

8. Article selon la revendication 1, dans lequel ledit composant catalyseur SCR est un tamis moléculaire ayant un cadre CHA et du cuivre en dehors du cadre.

9. Article selon la revendication 1, dans lequel ledit composant catalyseur d'oxydation de suie a une formule W:CeₓO_{2Z}r₁₋ₓO₂, dans laquelle x = 0, 1 à 0, 9 et ledit composant catalyseur SCR a une formule Fe-W:Ce_{x'}O₂Zr_{1-x'}O₂, dans laquelle x' = 0,1 à 0,99.

10. Article selon la revendication 9, dans lequel x est inférieur à 0,5 et x' est supérieur à 0,5.

11. Article selon la revendication 9, dans lequel ledit composant catalyseur SCR a un rapport W:Fe supérieur à 0, 5.

12. Article selon la revendication 1, dans lequel ledit composant catalyseur d'oxydation de suie et ledit composant catalyseur SCR ont la même formulation et dans lequel ledit composant catalyseur d'oxydation de suie dans l'entrée et ledit composant catalyseur SCR dans la sortie sont présents dans un rapport de 1:25 à 1:2.

13. Article selon la revendication 1, dans lequel ledit filtre à suie est un filtre à écoulement sur les parois.

14. Système de traitement des NOₓ dans un gaz d'échappement à mélange pauvre comprenant :
a) un injecteur de réducteur azoté ;
b) un filtre catalytique à double fonction comprenant
i. un filtre à suie ayant une entrée et une sortie,
ii. une zone d'oxydation de suie sur l'entrée, la zone d'oxydation de suie comprenant un composant catalytique d'oxydation de suie essentiellement composé d'au moins un métal dispersé sur un oxyde mixte et/ou composite de cérium et de zirconium, l'au moins un métal étant choisi dans le groupe constitué par W, Cr, Ce, Mn, Fe, Co, Ni, Cu, et les combinaisons de ceux-ci, et
iii. une zone SCR déposée sur la sortie, la zone SCR comprenant un composant catalytique SCR,
dans lequel ledit injecteur est disposé en amont de, et est en communication fluidique avec, ledit filtre catalytique à double fonction.

15. Procédé de traitement d'un gaz d'échappement à mélange pauvre comprenant :
a) l'écoulement d'un courant de gaz d'échappement à mélange pauvre comprenant de la suie, des NOₓ et un réducteur azoté à travers un filtre catalytique à double fonction comprenant
i. un filtre à suie ayant une entrée et une sortie,
ii. une zone d'oxydation de suie sur l'entrée, la zone d'oxydation de suie comprenant un composant catalytique d'oxydation de suie essentiellement composé d'au moins un métal dispersé sur un oxyde mixte et/ou composite de cérium et de zirconium, l'au moins un métal étant choisi dans le groupe constitué par W, Cr, Ce, Mn, Fe, Co, Ni, Cu, et les combinaisons de ceux-ci, et
iii. une zone SCR déposée sur la sortie, la zone SCR comprenant un composant catalytique SCR ;
b) l'oxydation d'au moins une partie de la suie au niveau de la zone d'oxydation de suie ; et
c) la réduction d'au moins une partie desdits NOₓ au niveau de la zone de catalyseur SCR.
